(19) Europäisches Patentamt
European Patent Office
Office européen des brevets

(11) **EP 3 732 028 B1**

(12) **EUROPEAN PATENT SPECIFICATION**

(45) Date of publication and mention
of the grant of the patent:
**17.07.2024 Bulletin 2024/29**

(21) Application number: **17840490.1**

(22) Date of filing: **29.12.2017**

(51) International Patent Classification (IPC):
**B29C 65/18** (2006.01)  **B29C 65/76** (2006.01)
**B29C 65/78** (2006.01)  **B65B 7/16** (2006.01)
**B65D 1/16** (2006.01)  **B65D 77/20** (2006.01)
**B29K 67/00** (2006.01)  **B65D 25/36** (2006.01)

(52) Cooperative Patent Classification (CPC):
(C-Sets available)
**B29C 66/53461; B29C 65/18; B29C 65/76;**
**B29C 65/7847; B29C 66/112; B29C 66/131;**
**B29C 66/24221; B29C 66/7392; B29C 66/92445;**
**B65B 7/164; B65D 1/16; B65D 77/2024;**
B29C 66/02241; B29C 66/1222; B29C 66/1226;

(Cont.)

(86) International application number:
**PCT/IB2017/001731**

(87) International publication number:
**WO 2019/130037 (04.07.2019 Gazette 2019/27)**

(54) **SEALING METHOD USING A THIN FLEXIBLE LID TO HERMETICALLY CLOSE A WIDE OPENING, DELIMITED BY AN INNER FLANGE, OF A CONTAINER**

VERSIEGELUNGSVERFAHREN UNTER VERWENDUNG EINES DÜNNEN FLEXIBLEN DECKELS ZUM HERMETISCHEN VERSCHLIESSEN EINER BREITEN ÖFFNUNG, BEGRENZT DURCH EINEN INNENFLANSCH

PROCÉDÉ DE SCELLAGE UTILISANT UN COUVERCLE SOUPLE MINCE POUR FERMER HERMÉTIQUEMENT UNE LARGE OUVERTURE D'UN CONTENANT DÉLIMITÉE PAR UNE BRIDE INTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.11.2020 Bulletin 2020/45**

(73) Proprietor: **Compagnie Gervais Danone
75009 Paris (FR)**

(72) Inventors:
• **ORCHARD, Alex James
78110 Le Vésinet (FR)**
• **COLLIGNON, Jonathan
75014 Paris (FR)**
• **DUCCOLI, Anabella
08024 Barcelona (ES)**

(74) Representative: **Plasseraud IP
66, rue de la Chaussée d'Antin
75440 Paris Cedex 09 (FR)**

(56) References cited:
**WO-A1-2014/182722    DE-A1- 2 806 770
US-B1- 6 547 093**

**(Cont. next page)**

(52) Cooperative Patent Classification (CPC): (Cont.)
B29C 66/71; B29C 66/73773; B29C 66/73921;
B29C 66/7486; B29C 66/8322; B29C 66/919;
B29C 2793/0081; B29L 2031/712; B65D 25/36;
B65D 2577/205

C-Sets
B29C 66/71, B29K 2023/06;
B29C 66/71, B29K 2023/12;
B29C 66/71, B29K 2067/003

## Description

FIELD OF THE INVENTION

The present invention generally relates to methods for hermetically close containers used in packaging industry, particularly plastic containers having an opening for retrieving content of the container.

More particularly, the invention relates to a sealing method, where a hollow body made of plastic material is closed by a flexible top lid.

BACKGROUND OF THE INVENTION

Containers with a body and an access opening at the top of the body, generally provided with a cover member to seal the access opening, are produced in very large quantities. The bottom is substantially flat and generally defines a bearing surface suitable to maintain the container in an upstanding position, parallel to the longitudinal axis. The opening is typically a wide opening directly defined at the top of the hollow body. The opening is surrounded by a flat upper edge, also called flange that protrudes outwardly as compared to the annular side wall of the body. The cover member and the flange protrude radially outward as compared to the upper part of the annular side wall of the body.

In the field of food products, the sealing membranes are typically sealed onto the flange and the flanged containers may also be interconnected by a flangeto-flange junction. Such containers are of light weight as compared to glass containers.

A drawback of such containers is that the flange is a thicker not stretched part and thus represents a significant amount of plastic material representing a cost and/or decreased sustainability footprint (more plastic used, more transportation needed for example). Additionally, the flange provides a visual aspect that some consumer would appreciate being different.

Some containers having a wide opening may also be provided with a rigid lid, for instance fixed onto a thread or similar fixing part of the container. Such containers are expensive.

Document US 6,547,093 discloses polypropylene containers without any outer flange and having a proper sealing between a seal member and a seal area at least formed on a radially inwardly extending, unsupported sealing lip. In such containers, the metallic foil seal member has a size much larger than the outer size of the side wall. Indeed, the sealing method uses a foil seal member of greater size than the outer size of the container side wall and such seal member must be folded when sealed onto the lip. As a result, the seal member is adhered over the container top so as to seal the mouth and extends over the upper surface of lip around the corner area formed between the lip and wall section and down towards a shoulder on the exterior surface of the wall section. With such arrangement of the seal member, the user cannot remove the seal member easily. Also the side wall cannot be of simple design and thickness of the side wall cannot be optimized. Additionally, the partial coverage of the side wall by the seal member provides an old-style visual aspect, that some consumer would appreciate being different. Finally the material in the seal at the partial coverage of the side wall represents a cost and/or decreased sustainability footprint (more plastic used, more transportation needed for example).

Document WO 2014/182722 A1 discloses a method for sealing a food container by a flexible lid, using a heating tool. An angled surface of annular shape is provided at the top of the container for forming the sealing area.

Document DE 28 06 770 A1 discloses a method for sealing thermoplastic containers, using a flexible lid and a heating tool.

Accordingly, there is an interest for sealing methods improving sealing efficiency on the one hand, and minimizing amount of plastic to be used in the container and/or in the lid on the other hand.

SUMMARY OF THE INVENTION

The purpose of the present invention is to provide a sealing method addressing one or more of the above mentioned problems.

To this end, embodiments of the present invention provide a method of sealing a container according to claim 1.

Of course the slope angle at the ring portion may be an angle to the horizontal (when the annular inner rim extends in a horizontal plane) and such angle may thus be measured typically when the opening extends in a horizontal plane.

Herein the term "vertical" can refer to the direction of the longitudinal axis (X). The term "horizontal" can refer to the plan perpendicular to the "vertical".

The flexible lid is typically made of a foil material to form a thin film piece. The flexible lid is thus generally thinner than a minimal thickness of the body. The sealing thus can be performed by using a flexible top lid (which typically forms a peelable lid).

Optionally, the thermosealing is performed after a filling of an interior volume of the hollow body with a content, for instance a food content, the hollow body having a bottom at the opposite from the opening which is a top opening, the flange being a top flange.

According to a particular embodiment, the flexible top lid has a pull tab laterally shifted relative to the top flange when sealing the flexible lid onto the flange.

Optionally, the flange is provided with an exterior face having a flat portion of annular shape having a radial width of at least 1.5 mm before the thermosealing, preferably at least 2.0 mm. The flat portion forms or is part of the ring portion that is pressed and heated during the thermosealing.

Optionally or additionally, the hollow body has a longitudinal profile with a curvature radius formed at the annular outer rim, which is of from 1.0 to 2.0 mm before the thermosealing.

According to a particular, the outer rim of the flange has, at least before the thermosealing, a determined thickness at least equal to 400 $\mu$m and not superior to 600 $\mu$m.

Optionally, the flange has a maximum thickness higher than an average thickness of the side wall, preferably at least 50 $\mu$m higher, preferably at least 100 $\mu$m higher, such maximum thickness being preferably of at least 400 $\mu$m. A better sealing resistance may be obtained with such configuration of the flange, especially in region provided with the flat portion and suitable to be longitudinally pressed.

According to a particular embodiment, the hollow body is provided with an annular part that acts as a hinge at a junction between the flange and the annular top of the side wall, at least before the sealing, whereby the flange is longitudinally movable in response to a pushing action performed when thermosealing the flexible lid on the ring portion. The slope angle at the ring portion is of interest to prevent any cracking in the side wall (of optimized thickness, typically less or much less than 1 mm) during the pushing action.

Optionally, the method may have one or more of the following particulars:

- the thermosealing of the flexible lid is performed by applying a sealing head at a temperature of from 140 °C to 200 °C, the thermosealing preferably including at least two thermosealing sub-steps, preferably from two to four thermosealing sub-steps.
- the thermosealing is performed by at least two pushing actions by the sealing head so as to decrease the slope angle defined in unsealed state of the flange to a lower angle value defined in sealed state of the flange.
- one among the sealing head and the side wall of the hollow body is repeatedly displaced in two opposite directions during the thermosealing, at least one movement in one of the two opposite directions being performed linearly along a stroke that is preferably shorter or equal to height of the flange in the unsealed state.
- the slope angle, in unsealed state of the flange, is comprised between 13° and 17°.
- the sealing (thermosealing) of the flexible lid to hollow body material, namely PET, of the ring portion is performed with a variation of pressure values for the contact due to relative movement between the sealing head and the hollow body.
- the vacuum leak resistance of the sealed container is of at least 0.2 mbar/mm$^2$, preferably from 0.2 to 2.0 mbar/mm$^2$. Such high vacuum leak resistance allows to package contamination sensitive products, such as wet and/or fresh products, preferably wet and/or fresh food products. Powdered dried products are less sensitive, containers comprising such products do not present such high vacuum leak resistance.
- the side wall is provided with an annular bulge, the side wall having an upper portion that tapers upwardly from the bulge toward the flange (sealing pressure resistance is improved when having such longitudinal profile in the side wall).

Optionally, the flexible top lid has substantially same outer size and shape as the outer rim of the top flange that is directly joined to the annular top of the side wall. When the lid is provided with a pull tab, the same applies in part of the lid complementary to the pull tab. In this latter case, the flexible top lid has an optimized size, with a single pull tab and without any useless part covering the side wall or laterally shifted relative to the side wall.

The gripping and the peeling of the pull tab in the opening plane may correspond to a same movement of the user as the small pull tab extends typically parallel (or substantially parallel) to the opening plane.

According to a particular, the side wall has an upper part (preferably free of relief) that tapers as far as the annular top of side wall where the top flange protrudes radially inward.

Due to the sealing step, the flexible top lid is only in axial contact with the upper part of the body. The small pull tab typically extends substantially horizontally, so that there is no visual interference between the outer face of the side wall and the flexible top lid provided with the tab. It is of interest for instance when the side wall is transparent and the top lid is opaque.

With such arrangement without any outer protruding edge as compared to the side wall, the bulk of the container is not perceived as thin as conventional, especially when the opening (which is typically wide, for example greater than 35 or 40 mm) is not wider than 60 or 70 mm. For dairy containers such as yogurt cups, an opening often has a maximal diameter strictly lower than 60 mm and higher than 40 or 45 mm.

In accordance with the invention, the sealing method may be part of a process for producing at least one container, such process comprising:

- preparing a hollow body having a bottom and a side wall to delimit an interior volume;
- filling the interior volume with a content, preferably a food composition, preferably a wet food composition, through a top opening delimited by a top flange that protrudes radially inward from an annular top of the side wall;
- thermosealing the flexible top lid onto an upper face of the top flange in an annular contact area continuously surrounding the opening.

Typically, the flexible top lid is sized and shaped so that only one optional pull tab of the lid, which is preferably not adhered to the body, radially protrudes outward to be laterally shifted relative to the annular top of the side wall.

The position of the flexible top lid is preferably adjusted with respect to an outer rim of the top flange during the sealing, so that an annular outer edge of the flexible lid, except when delimiting an optional pull tab:

- does not extend radially beyond the outer rim of the top flange, or
- extends radially at most 2.0 mm, preferably at most 1.0 mm, beyond the outer rim of the top flange.

Using such a process, a wide top opening is sealed after a filling step, exactly onto upper face of the top flange. Surprisingly, the top lid is sealed with sufficient strength to the wide top opening, typically with the vacuum leak resistance mentioned above, so as to fulfil the storage and transport requirements on the one hand, and facilitate peeling operations on the other hand.

According to a particular, a decorative sleeve is adhered to the side wall after being transported longitudinally from the bottom side, the decorative sleeve being adhered to the side wall at an axial distance from an annular bearing surface of the bottom.

The hollow body can be prepared by the blow-trim process, for example an injection blow molding plus blow-trim process or an extrusion blow molding plus blow-trim process. In a particular embodiment, the hollow body is prepared by a process comprising the following steps:

- forming by blowing plastic material a pre-container extending along a central axis, so as to define an opened pre-container section and one hollow body section defining at least one side wall extending around the central axis, the opened pre-container section being joined to the remainder of the pre-container at a peripheral intersection line formed by at least one circumferential groove, and
- cutting at the at least one circumferential groove the opened pre-container section in a direction transverse to the central axis to form a top opening of the hollow body
- preferably recycling the opened pre-container section in the stream of plastic material.

According to a particular, a pre-container is formed as a single bottle-like piece and then trimmed to obtain the hollow body. Preferably, the pre-container may be obtained by blow molding, optionally using a hollow preform of plastic material, so as to define a hollow pre-container of tubular shape extending between the bottom and the opened section.

The cutting step to form the top flange may be performed transversally to the central axis, so that the top flange is of annular shape and continuously surrounds the top opening of the hollow body.

Then, it is understood that the top flange of annular shape is used to define a rest area where an annular margin portion of the corresponding flexible top lid is affixed, producing a continuous annular sealing contact, for instance by thermosealing.

In various embodiments of the method of the invention, recourse may optionally also be had to one or more of the following dispositions:

- the pre-container is formed by a blow molding technology.
- a hollow preform is stretch-blow molded to obtain the pre-container.
- an Extrusion Blow Molding technology is used to form the pre-container.

Independently or in combination with above mentioned, and with understanding that examples and details of realization hereafter described each can be used in isolation, it is also proposed a plastic container having a sealed top and intended for a food product or any suitable content to be retrieved by a wide opening. Such top opening is hermetically closed, possibly using the above described sealing method. The upper portion of the side wall and the flange define a simple shape, without any outer flange, neck, thread or groove.

In food industry as in other fields, plastic containers can often be stacked on top of one another so as to form stacks which can be layered on a pallet. When having such container, without an outer flange protruding outwardly as compared to the annular side wall of the body, a pallet may contain more containers as interspace between the containers may be reduced.

Besides, the design of the top of the container provides a different visual attraction as compared to a top of a container having an outer flangeor to a top of a container having a folded flexible lid, (typically showing wrinkles on the lateral side).

As the flexible top lid is provided without any folded part, the user may also grip the pull tab in easier manner, without requirement for unfolding some margin parts of the lid.

The amount of material to produce the top lid (thin foil) is thus reduced, while offering:

- efficient seal on the one hand,
- and sufficient sealing tightness on the other hand (to prevent accidental cracks or leaks).

This is advantageous to have a container without any rigid lid. Good compromise is obtained due to high precision and efficiency, when adhering the flexible top lid to the top flange. The particular connexion between the top flange and the tapered upper portion of the side wall is of interest to obtain such sealing efficiency. For example, when the side wall is provided with an annular bulge close to the bottom, the side wall with the tapered upper part can better reversibly deform and resist to the vertical effort required for sealing onto the upper face of the top flange.

The top opening is a wide opening, for example suitable for insertion of a conventional spoon.

Throughout the description and claims of this specification, the wording "wide opening" means that the opening has a diameter (if the opening is circular) or smaller size (if the opening is not circular) at least greater than half the inner diameter or similar radial size measured at a narrowest section of the side wall of the body. Optionally, such diameter or smaller size of the opening is at least greater than three quarters of the inner diameter or similar radial size of the side wall (i.e. with a length ratio of at least 3/4 between such sizes). Preferably, the wide opening has diameter or equivalent characteristic size superior or equal to half the diameter or similar radial size measured at a maximum of section of the side wall of the body. Such wide top opening typically is the single opening of the body.

The flexible top lid, made of a thin film or layered material, does not increase the bulk of the container and does not reduce the interior volume to be filled with container content. Preferably, the hollow body and the flexible top lid delimit an interior volume suitable for receiving a product. The side wall extends around a longitudinal axis that intersects the flexible base lid.

Optionally, the following relation is satisfied:

$$S1/S20 < 1/5$$

where S1 is the upper surface formed by the pull tab and S20 is the entire upper surface formed by the flexible top lid.

Such surface ratio may be superior to 1/25, preferably between 1/15 and 1/8. Preferably, the entire upper surface formed by the flexible top lid is comprised between 18 cm$^2$ and 40 cm$^2$, preferably between 20 cm$^2$ and 30 cm$^2$. The upper surface of the pull tab may be typically comprised between 0.9 et 6 cm$^2$, preferably between 1.3 and 4.5 cm$^2$.

The hollow body is a one-piece body made of thermoplastic material, namely PET. Made from PET, such body may be recycled exactly as a conventional PET bottle.

According to a particular feature, the hollow body is a blow molded piece made of PET. The hollow body thus can be of lighter weight as compared to a side wall of a deep-drawn plastic packaging cup. The hollow body may be obtained with lower cost related to the plastic material in the one hand, and with lower environmental footprint on the other end.

Maximal thickness in the upper portion of side wall is optionally lower than 300 or 450 $\mu$m. Preferably for having a container having a thin wall (typically with a body of less than 5 or 7 g), maximal thickness in the whole side wall is lower than 300 or 450 $\mu$m.

The hollow body has a capacity between 50 ml to 1000 ml, preferably 75 ml to 250 ml, and may be used to store an amount of food composition representing at least 50 g and up to 1000 g, preferably between 75 g and 250 g of a food composition, preferably wet food composition, for example a dairy composition.

Mechanical properties of the stretched blow molded body are higher when the body is made from a semi-crystalline PET. The body may have a side wall thickness of less than 300 or 450 $\mu$m, substantially in the middle of the side wall body. Semi-crystalline PET means in the present specification a PET having a crystallinity comprised between 5 or 10 % and 60 %. More preferably, the crystallinity is comprised between 15 or 20% and 40 %.

The container may have height, measured along a longitudinal axis of the side wall, which is optionally lower than 80 or 100 mm and greater than 40 or 45 mm. The container also has an outer dimension, for example a diameter D1, measured in a virtual plane perpendicular to the longitudinal axis Such outer dimension may be the maximal outer dimension (greater or equal to the height). As the flexible top lid is made of a foil and is not folded, the container height is essentially defined by the hollow body.

In various embodiments of the container of the invention, recourse may optionally also be had to one or more of the following dispositions:

- the top opening defines an opening diameter in an opening plane which is at least equal to 35 mm, while maximal radial extension of the top flange as measured in the opening plane, between the outer rim and the inner rim, is less than 5.0 mm, preferably inferior or equal to 4.0 mm.
- the longitudinal axis is a symmetry axis.
- the top flange extends at radial distance from the axis and at a radial distance from a virtual cylinder having same section as the greatest outer section of the side wall.
- the flexible top lid essentially consists of paper, plastic, or association of such materials.
- the flexible top lid is deprived from any metallic foil.
- the side wall has a flat longitudinal profile, at least in an upper portion of the side wall, the upper portion extending at least 10 mm, preferably at least 20 mm downwardly from the outer rim of the top flange (as the side wall has no groove in this upper portion near the top of the side wall, a better sealing can be obtained, especially when the body provided with the flange is in PET).
- the annular side wall comprises an upper portion adjacent to the top and a lower portion adjacent to the base.
- the annular side wall comprises a peripheral bulge (optionally a circular bulge) at a junction/intersection between the upper portion and the lower portion.
- the annular side wall may comprises a bulge having a circular cross section,

- the upper portion has a maximal width defined at the bulge.
- the annular bulge of the side wall is axially distant from the top flange (the bulge is of interest for allowing deformation of the top flange. Such deformation is useful with sealing performed using PET material, which is more difficult to seal than PE for instance).
- the side wall is provided with a decorative sleeve (banderol, shrink sleeve or similar element, typically delimited between a straight lower edge and a straight upper edge) that is covering at least an upper portion of the side wall.
- the container is provided with a decorative banderol surrounding all or part of the side wall.
- the decorative banderol is a plastic sleeve defined by a shrink film, which is optionally at least partly transparent or translucent.
- the shrink film has thickness optionally between 25 and 100 $\mu$m.
- axial distance between an upper annular rim of the decorative sleeve and the outer rim of the outer flange is inferior or equal to 5 or 10 mm. In other words, the visible part of the upper portion may be reduced between the flexible top lid and the banderol, which is of interest to improve perception of what is indicated/shown on the outer face decorative sleeve. The specific size of the top lid is advantageous to improve perception of this decorative sleeve when the user watches the container from an elevated position (no interference due to a outer flange or a part of a cover member.
- the flexible top lid forms an uppermost face of the container (uncovered face). The container does not present means to receive and/or is free of rigid overcap. Typically, the side wall is without any neck and without any thread adjacent to the flange.
- the flexible top lid is in an unfolded state when sealing the top opening, so that the pull tab forms a substantially horizontal extension laterally shifted with respect to the of the top flange.
- the pull tab is the only gripping part for separating the flexible top lid from the top flange.
- the top flange is ring-shaped or crown-shaped.
- the free edge or inner rim of the top flange is a cut free edge, typically cut in a direction transverse to the longitudinal axis of the side wall.
- the top opening surrounded by the top flange is defined at the top of the hollow body, without any neck or shoulder between the annular side wall and the top flange.
- the top lid, defined by a flexible sealing film, is fixed only to an upper face of the top flange.
- the top lid is in axial contact with the top flange without any contact with the annular side wall.
- the top lid is in axial contact with the top flange and also in selective contact with the annular side wall due to the pull tab.

- the top lid covers entirely the upper face of the top flange.
- the top lid comprises a closing portion sealing the upper opening in an annular area, the closing portion having a circular circumference defined by an outer edge of said annular area, the pull tab being entirely offset relative to said annular area.
- the closing portion and the pull tab art parts of a single piece foil.
- the top lid is provided with a reinforcing piece covering the closing portion at least in an annular area corresponding to the sealing area.
- the top lid is of circular shape except in a region where the pull tab extends.
- the top lid is of oval shape except in a region where the pull tab extends.
- the top lid is defined by a single piece foil.
- the top lid is defined by a single layer of film.
- the top lid is defined by a multilayered film.
- the top lid has a thickness of from 20 to 50 $\mu$m preferably from 25 to 40 $\mu$m.
- the top lid and/or a decorative banderol may be formed by a flexible multilayer sheet with an outer face made of plastic so that this upper face may be marked with information, for instance by ink printing (this is advantageous for individualizing the container, for instance when printing a conventional barcode or a coded 2D-pictogramm or information and/or pictures onto the upper face of at least the central closing portion of the top lid).
- a central closing portion of the flexible top lid is surrounded by a ring-like margin portion in contact with the hollow body at the top flange and having a radial extension equal, with a maximum tolerance not superior to 1 mm, to the radial size of the top flange, except in region of the pull tab.
- the central closing portion is typically a main part of the flexible top lid, the central closing portion and the ring-like margin portion preventing air entry in an interior volume of the container.
- the container may be a capless container.

In various embodiments of the container of the invention, the hollow body may be provided with one or more of the following features:

- the hollow body is deprived of any outer collar or outer flange.
- the hollow body is a threadless tubular body (indeed, there is no need for screw caps, use of screw caps often being time consuming, which often leads to a person not using the cap or the cap being lost).

- the hollow body is made of a plastic material less flexible than the top lid and/or has a minimum thickness in a flexible part of the side wall (for instance substantially in the middle) which is superior to maximum thickness of the top lid.

- the side wall has a longitudinal profile that is continuously rounded from an upper end of the side wall to a lower end of the side wall.
- the annular side wall defines a single annular side wall of the hollow body and is defined by a single layer of plastic material.
- the annular side wall defines a single annular side wall of the hollow body and is defined by at least two distinct layers so as to define a multi-material hollow body.
- the plastic material of the body is suitable for blow molding process, for instance for a stretching blow molding.
- the side wall is provided with a non-circular or non-symmetric cross section, which may be of interest, for example to stabilize product movement contained in the interior volume and, for a set fermented dairy composition, to prevent product degradation with formation of whey.
- the upper portion and the lower portion of the side wall intersect and interconnect at a peripheral intersection line, the lower portion tapering from the upper portion toward the bottom portion in a curved manner.
- the outer perimeter SP1 defined at the peripheral intersection line and the outer perimeter T1 defined at the top are such that the following relation is satisfied:

$$0.8 < T1/SP1 < 1.1.$$

Preferably there is a difference in thickness, for instance lower than 15 or 20 %, due to an increase in thickness in the part of the top flange that is heat sealed and in contact with the flexible top lid.

An average thickness may be calculated in a known manner, without compressing the plastic material and by measuring in a plurality or regularly spaced locations (typically with at least five measurements). For this purpose, the top flange may be optionally cut.

The flexible top lid typically consists of a flexible foil, possibly an aluminium film, a metal-free plastic film or a multi-layered composite film with or without a metal layer. The flexible base lid can be optionally configured in a planar manner, at least in a main portion thereof, for example in a central portion surrounded by an annular margin portion.

With such arrangement, plastic material can be saved due to the reduction of plastic amount used in the hollow body to define the support area for sealing the top opening of the container. The top flange of annular shape is defined at an uppermost end of the hollow body, at a radial distance from the longitudinal axis.

Of course, the term "annular" should not be here interpreted in any strict manner, provided that the corresponding shape defines a ring-like closed section, typically around a central axis. This does not exclude any straight segments as perceived in cross section and polygonal shapes or partly polygonal shapes may be interpreted as annular shapes in such context.

But, in a preferred embodiment, the top opening is a generally circular opening or strictly circular opening (without any straight segment), and the outer rim of the top flange may be generally circular.

According to a particular, following relation is satisfied:

$$L1/P5 < 1/5$$

where P5 is outer perimeter of the outer rim of the top flange, and
L1 is length of a curved junction separating the pull tab from complementary part of the flexible top lid that covers the body.

According to a particular, the hollow body is at least partly transparent or translucent. The hollow body is made of a thermoplastic material, namely PET.

The container provided with the specific flange may be sealed by selectively pushing the flange in the ring portion and thermosealing the flexible lid placed in contact with the external face of the flange. With such configuration the, sealing may be performed with selective displacement of the flange, possibly by repeatedly pushing the flange without axially moving the flexible lid in the interior volume formed by the side wall (i.e. without moving the flexible lid beyond or significantly beyond a virtual plane intersecting the annular outer rim of the flange).

Optionally, the flange of the hollow body comprises:

- a first flange portion of annular shape distal from the annular inner rim; and
- a second flange portion of annular shape, in which the annular inner rim is formed, the second flange extending perpendicular to the longitudinal axis (typically before and also after the sealing).

According to a particular feature, the first flange portion and the second flange portion form the ring portion of the flange for fixation and thermosealing of the flexible lid (the ring portion thus can be angled before the sealing).

Typically, the hollow body is provided with an annular part that acts as a hinge at a junction between the flange and the annular top of the side wall, whereby the flange is longitudinally movable in response to a pushing action performed when thermosealing the flexible lid onto the ring portion. In the sealed state, the flange can extend substantially perpendicular to the longitudinal axis and/or the first and second portions are less angled than before the sealing.

Other features and advantages of the invention will become apparent to those skilled in the art during the description which will follow, given by way of a non-limiting example, with reference to the appended drawings.

## BRIEF DESCRIPTION OF THE DRAWINGS

Fig. 1 shows a container according to a first embodiment of the invention;
Figs 2A and 2B illustrate same longitudinal section view to show a detail in the upper part of a container before sealing the opening;
Fig. 2C is a longitudinal section view showing a detail in the upper part of a container in a closed state;
Fig. 3 is a perspective view showing a cut of a pre-container, in order to obtain the hollow body of the container;
Fig. 4 illustrates a detail of the view of Fig. 3, showing the top flange that projects radially inward from the top of the side wall;
Fig. 5 is a top view of a container in accordance with the invention;
Fig. 6 schematically illustrates filling and sealing steps in a method of producing containers filled with a food composition and such as illustrated in Fig. 1;
Fig. 7A is a longitudinal section view showing a step of fixing the flexible top lid on an upper face of the top flange;
Fig. 7B is a bottom view of a sealing head used to perform the kind of fixation shown in Fig. 7A;
Fig. 8 is a longitudinal section view of a detail in the side wall of a pre-container, before a trimming operation through a circumferential groove.

## DETAILED DESCRIPTION OF EMBODIMENTS

In the various figures, the same references are used to designate identical or similar elements. Some sizes may be exaggerated (for instance some thicknesses) for the purpose of illustration.
In the present application, the vacuum leak resistance is an indicator of how hermetically the container body 3 and the container lid 20 are fastened. The higher the vacuum leak resistance is the better hermetically the body 3 and the container lid 20 are fastened. The vacuum leak resistance is measured by immersing a sealed container at atmospheric pressure into water, subjecting to vacuum to create in internal pressure inside the container, and determining the depression under which bubbles or product leak from the sealed container, per surface of sealing area. The absence of leaks indicates air tightness. Vacuum leak resistance can be determined according to the following procedure:

Material:

- Bell Jar with transparent bell, for example Lippke

® 1350 or 1360;
- Vacuum pump, for example double head diaphragm pump;

Procedure:

- Set test depression and test time to 10 seconds
- Provide sample(s) at room temperature, preferably from 20 to 25°C
- Fill the vacuum chamber with tap water at room temperature, preferably from 20 to 25 °C,
- Plunge sample to be tested in the water, preferably with the lid on the top to facilitate reading
- Wait until residual bubble disappear
- Close the bell and start the pump
- Reach the depression to be tested, wait 10 seconds, and observe if bubbles or product leak from the sample(s)
- Optionally repeat with higher depressions, and note the depression at which bubbles or product leak.
- Divide depression by the surface of the sealing area, to obtain the vacuum leak resistance.

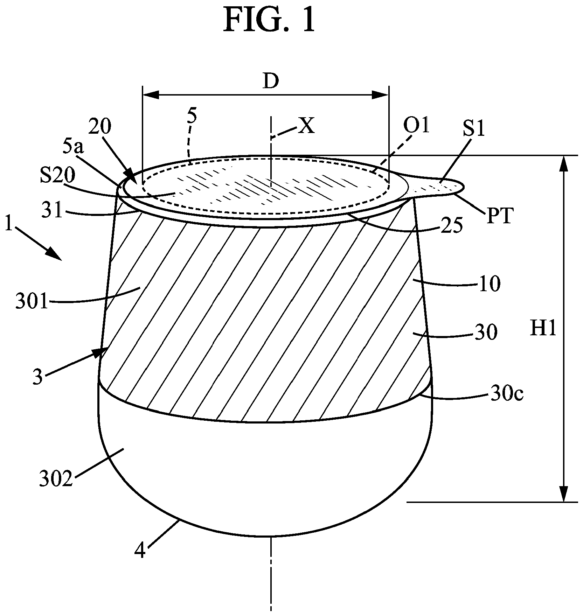

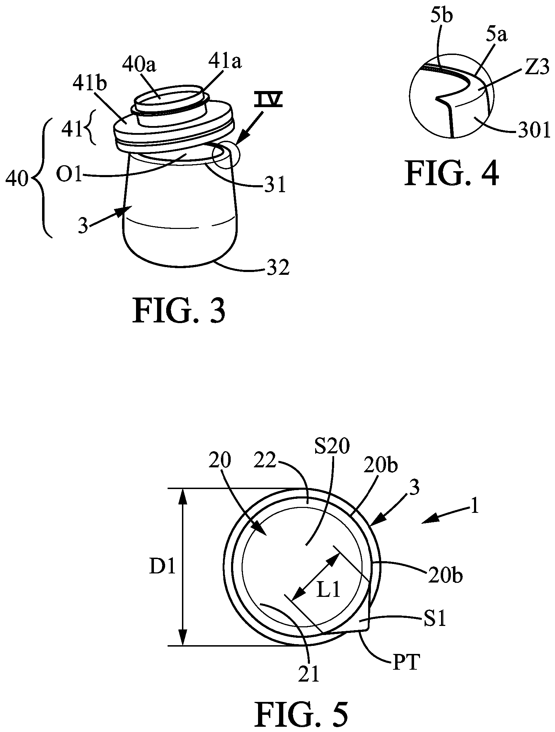

The vacuum leak resistance is preferably established as an average 5 samples, preferably 10 samples.
Referring to Figs 1 and 5, the container 1 may be provided with a single piece body, which defines a hollow body 3. The body 3 has a determined outer shape and has a tubular side wall 30. Circular or oval shapes for cross section of the side wall 30 may be cited as non-limitative examples. But any other suitable annular shape may be used, such as square or square with round corners shapes. The side wall 30 of the body 3 extends longitudinally, from a bottom 4 provided with a bearing surface 32 to a top 31 of annular shape. The side wall 30 typically extends around a longitudinal axis X, which may optionally be a central axis or a symmetry axis. The bearing surface 32 may be of annular shape and is part of the bottom 4 that is an integral part of the body 3. The height h of the hollow body 3 is defined between the bearing surface 32 and an uppermost end, here formed by a top flange 5. Such height h may be substantially equal to total height H1 of the container 1 as only a thin flexible lid 20 overlies the top flange 5 (difference H1-h being for instance less than 100 $\mu$m, or less than 1% of height H1, for example from 20 to 40 $\mu$m, preferably from 25 to 40 $\mu$m.
The hollow body 3 is here made of plastic material, typically a single plastic material, for example thermoplastic material, and can be browned. It can be obtained form example blow molding an injected preform, typically an injected preform, or by extrusion blow molding. In these cases, as illustrated in Fig. 3, at least one cutting operation may be performed in a pre-container 40 to define a top opening O1, so that the side wall 30 has a tubular shape of relatively wide section. The top opening O1 is also relatively wide as compared to the maximal radial size, here diameter D1 (see Fig. 5), of the hollow body 3. In the following, the top opening O1 is to be interpreted as wide opening due to a diameter or equivalent characteristic size superior or equal to half (or possibly superior or equal to three quarters) of the diameter D1 or similar radial size measured at a maximum of section of the side wall 30 of the body 3.

The thermoplastic material for the body 3 is polyethylene terephthalate (PET). Polyethylene terephthalate (PET) has certain very advantageous properties of bodies made from this material (namely their good mechanical resistance, the facility to be filled with a hot liquid or substance, the good transparency of the PET which does not adversely affect the appearance of the content, a relatively good barrier effect to oxygen). Also PET containers can benefit from appropriate recycling streams.

The top opening O1 of the body 3 is delimited by an inner rim 5b having a circumference lower than circumference of the top 31. Indeed, the body 3 is provided with a top flange 5 that protrudes radially inward from the top 31 of the side wall 3. The top flange 5 and the bottom 4 correspond to opposite ends of the body 3, and extend each transversally with respect to the longitudinal axis X.

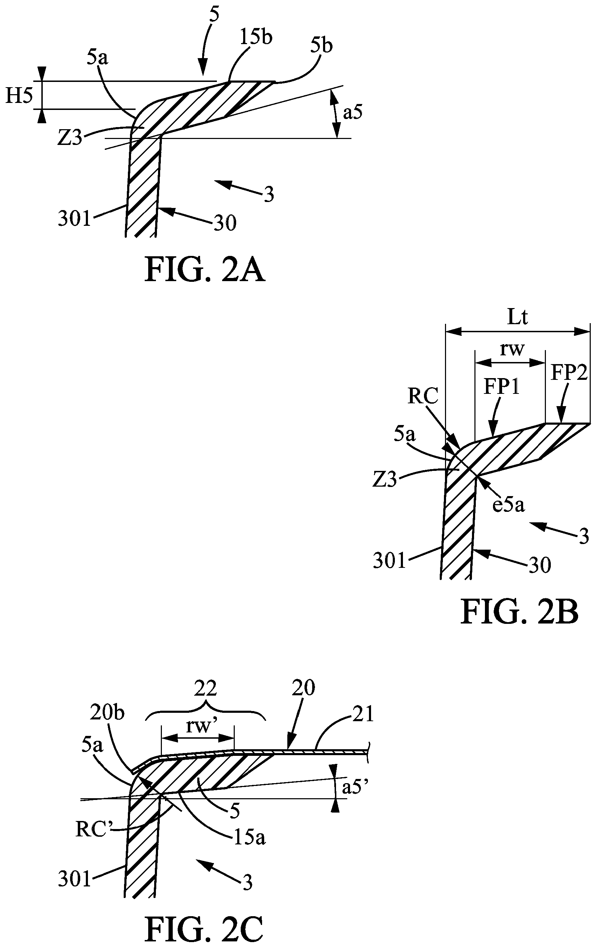

Referring to Figs 1 and 2A-2B, the inner rim 5b may extend in a horizontal opening plane, while the upper portion 301 of the side wall 30 is substantially vertical or slightly tapering (for instance with a tapering at about 5-25° from the vertical), in a progressive manner, toward the top flange 5. The interior face of the annular upper portion 301 is smooth, without any relief. Here, the same applies for the outer face of the upper portion 301.

As shown in Fig. 4, the side wall 30 has a flat longitudinal profile, at least in the upper portion 301 and such flat longitudinal profile may extend at least 10 mm, preferably at least 20 mm downwardly from the outer rim 5a of the top flange 5. The inner rim 5b may extend at slightly lower height level than the outer rim 5a, due to angle a5' formed between the lower face 15a of the top flange 5 and a horizontal plane intersecting the top 31 of the annular side wall 30. Referring to Figs 2A and 2C, it can be seen that the angle a5' is formed when the container 1 is in a sealed state, while a bigger angle a5 is formed at same location before the sealing by the top lid 20.

Here, the side wall 30 is a thread-less and neckless side wall.

The top opening O1 defines an opening diameter D in an opening plane which is at least equal to 35 or 40 mm, while maximal radial extension Lt of the top flange 5 is less than 5.0 mm, preferably inferior or equal to 4.0 mm. Such radial extension Lt is measured in the opening plane, between the outer rim 5a and the inner rim 5b. The radial extension Lt is optionally constant.

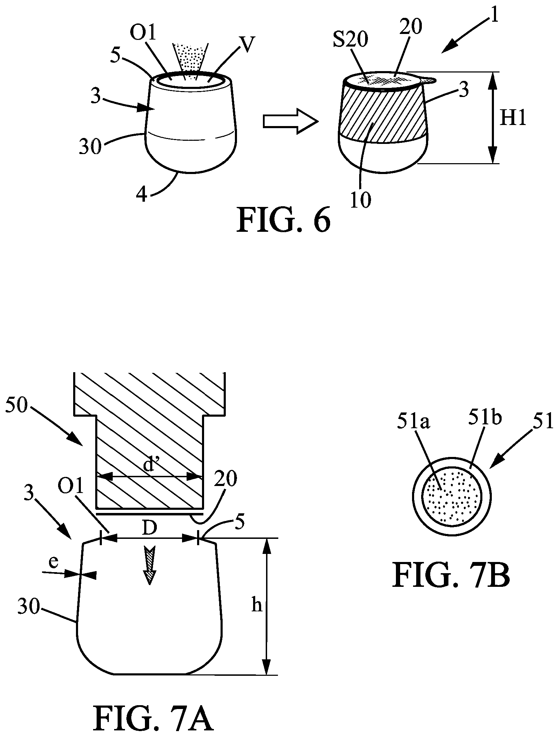

The top opening O1 may be intersected by the longitudinal axis X and allows content of the container 1 to be retrieved by the consumer. Referring to Fig. 1 or 6, it can be seen that this top opening O1 is typically a particularly wide opening, having typically a diameter D or similar characteristic radial size superior to 35 or 40 mm. This may be advantageous to allow a spoon to be introduced in an interior volume V through the top opening O1. Such wide top opening O1 is required when using the container 1 for receiving a scoopable solid (as opposed to powder), liquid or viscous fluid, composition, for example food composition, for example wet composition, where use of a spoon is convenient for efficiently retrieving the content. As shown in Figs 1 and 3, the base 32 of the bottom 4 is not necessarily as wide as the inner rim 5b of the top flange 5. The annular base 32 shown in Fig. 3 forms a bearing surface of smaller size than the top opening O1.

A top lid 20, here a flexible top lid made of a foil material, is in annular contact with the top flange 5 to seal the top opening O1. The cutting operation to obtain the opening O1 may be performed by transversally cutting a pre-container 40 or a bottle-like piece, which is blow molded from a preform (not shown). The cutting is preferably performed at at least one groove designed for this, so as to form the top opening O1 of the hollow body 3.

Due to this specific method, PET is advantageously used to define the hollow body 3. Indeed, PET is of interest to maximise material performance per gram in the stretched area. PET is of interest due to high scale (preforms), link into PET industry roadmap, recyclability, transparency with high quality (better than polypropylene or polyethylene for instance).

The container 1 is provided with a flexible top lid 20 of suitable size and shape to close the top opening O1. The flexible top lid 20 is arranged in sealing contact with the upper face 15b of the top flange 5, namely in annular contact in an annular contact formed entirely above the side wall 30. Such top flange 5 may be crownshaped. When the top opening O1 has a diameter or maximal radial size D, greater than or equal to 30 or 35 mm, it is understood, that a central closing portion 21 of the top lid 20 has same characteristic size. Such size D may be inferior or equal to 100 mm.

The flexible top lid 20 forms here a single foil sealing system, only comprising a sealing foil that is fixed to the upper face 15b of the top flange 5, in order to seal the top opening O1. An appropriate cut is performed to define an outer shape of the sealing foil. The sealing foil may be a one-piece foil of material suitable for food contact. The material allows the sealing foil to be bendable. The material or foil is comprised of paper or plastic and/or associations thereof, eventually in association with aluminium. In a preferred embodiment the material and/or of foil is metal-free. Typically, the material and/or foil has low water permeability, is approved for food contact and is not flammable.

Typically, maximal thickness of the top lid 20 is comprised between 20 and 50 $\mu$m for instance, and preferably between 25 and 40 $\mu$m.

The top lid 20 is optionally provided with a pull tab PT. The pull tab PT is here integrally formed with the flexible top lid 20. Easier removal of the flexible top lid 20 is obtained when pinching the pull tab PT that is entirely offset (radially outward) with respect to the top opening O1. The flexible top lid 20 adheres to the top flange 5, using an adhesion force inferior to a tearing force required to tear the top lid 20. The top lid 20 is thus entirely removable without tearing from the annular top flange 5 or similar top portion when pulling the pull tab PT or similar peripheral portion. In other words, no lid material remains affixed to the hollow body 3 when the top of the container is fully open. Easy separation from the body 3 is of interest for disposal of the body 3, which is typically highly suitable for recycling and economical valorization.

Except at such optional pull tab PT, the flexible top lid 20 does not significantly protrude radially outwards as compared to the side wall 30, as illustrated in Fig. 1 for instance, and more precisely, it is understood that the annular outer edge 25 of the flexible top lid 20 may remain substantially parallel to the outer rim 5a of the top flange 5, thus not extending radially beyond 2.0 mm, preferably not beyond 1.0 mm from such outer rim 5a (except in region of the optional pull tab PT). In one embodiment, not represented, the annular outer edge 25 of the flexible top lid 20 does not extend beyond the outer rim 5a of the top flange 5 (except in region of the optional pull tab PT). As such the flexible top lid 20 would cover only partially the top flange 5 (for example not covering an external margin area of the top flange 5, except in region of the optional pull tab PT if present).

Fig. 1 shows the pull tab PT defined as an extension locally protruding beyond an annular outer rim 5a of the top flange 5 defined at the top 31 of the side wall 30. The pull tab PT of course has an outer rim that represents a margin part of the full circumference of the top lid, for example less than a quarter or less than a fifth of the full circumference of the top flange 5. Besides, the following relation may be satisfied:

$$L1/P5 < 1/5$$

where P5 is outer perimeter of the outer rim 5a of the top flange 5, and
L1 is length of a curved junction (see Fig. 5) where the pull tab PT joins (intersects) the complementary part of the flexible top lid 20 that covers the body 3. Such complementary part of the top lid 20, which may be symmetrical around the longitudinal axis X, consists of the central closing portion 21 and the adhering ring portion 22 in annular contact with the top flange 5.

Now referring to Figs 2A-2B and 4, it can be seen that the top flange 5, of annular shape, may be an inner flange. Indeed, there is typically no outer relief at the top part of the body. The top flange 5 is provided with an inner edge 5b, proximal to the longitudinal axis X, radially offset inward as compared to the side wall 30. With such kind of top flange 5, without any outer protruding edge as compared to the side wall 30, the bulk of the container 1 is not perceived as thin and trays may be filled with the containers 1 without significant space between the containers, unlike containers having outer flanges or similar collars. The container 1 may be more compact. It is also understood that the bodies 3 are designed to maximize amount of content/product per tray and/or per pallet.

The top flange inner rim 5b has a cut edge obtained by a cut performed in a transverse direction. Optionally, the inner rim 5b may form a thinned part of the top flange 5, opposite to a thick part closer to the side wall 30.

As illustrated in Figs 2A-2B in particular, the top flange 5 of annular shape may have a radial size or extension Lt, measured between the outer rim 5a and the inner rim 5b along the opening plane. Such radial extension Lt is typically less than 5.0 mm, preferably inferior or equal to 4.0 mm. It is understood that the top lid 20 has an adhering ring portion 22 (in contact with the top flange 5, including the outer edge 25 and surrounding the central portion 21) provided with a radial extension not superior to 5 mm.

The outer edge 20b of the top lid 20 may be defined in a margin portion that overlies the top flange 5, as illustrated in Fig. 1. In the top lid 20, an adhering ring portion 22 (see Fig. 2) may also be a circumferential margin portion of same extension as compared to extension of the top flange 5, as measured in any longitudinal plane parallel to the longitudinal axis X. The adhering ring portion 22 is fixed on the upper face 15b that extends without any significant relief. As illustrated in Fig. 2, the pull tab PT extends beyond an outer limit of the adhering ring portion 22.

In preferred embodiments, one of the following relations, is satisfied:
$1.0 \text{ mm} \leq Lt \leq 5.0 \text{ mm}$, preferably $1.5 \leq Lt \leq 4.0 \text{ mm}$, preferably $2.0 \leq Lt \leq 3.0 \text{ mm}$.

Besides, the ratio Lt/D may be inferior to 1:10.

In the upper face 15b of the top flange 5, a flat annular surface portion may be formed, and radial extension of such flat annular surface portion (i.e., surface portion without any change of curvature) may be about 2 mm. Corresponding thickness in the top flange 5 may be comprised between 400 and 600 $\mu$m.

Referring to figure 2B, the top flange 5 is slightly tapering upwardly, so that a shallow angle a5' is defined between a horizontal plane perpendicular to the longitudinal axis X and the upper face 15b of the top flange 5. The angle a5' is typically inferior or equal to 7 or 9°, preferably strictly inferior to 6°, so that height of the top flange 5 is minimized.

Now referring to Figs 2A-2B, as the hollow body 3 is typically semi-rigid, for example as rigid as plastic bottles containing gaseous water or sodas, the body 3 may be provided with an annular part Z3 that acts as a hinge at a junction between the top flange 5 and the top 31 of the side wall 30, i.e. in a region adjacent to the outer rim 5a. When heat sealing the flexible top lid 20 and possibly after, the top flange 5 may be slightly movable axially inwards. This prevents formation of cracks and provides a damping effect, at least with respect to vertical load, suitable to prevent accidental leaks at or around the top opening O1.

Of course, the hinge effect is only of low amplitude, as plastic material of the hollow body 3 is significantly more rigid than the foil material used for the flexible top lid 20.

In the exemplary embodiment of Fig. 1, the side wall 30 has an upper portion 301, directly connected to the top flange 5, and a lower portion 302 tapering from the upper portion 301 toward the bottom 4, in a curved manner as clearly apparent in the Fig. 1.

The bearing surface 32 formed at the bottom 4 may be circular or may optionally define a non-circular shape for the base opening 32, while defining a substantially planar bearing surface for stability purposes. More generally, the side wall 30 may be provided with any ring-shape, either of circular cross-section, or including one or more portions with non-circular cross-sections or with non-symmetric shape.

Still referring to Fig. 1, the upper portion 301 of the side wall 30 defines a generally flat surface suitable for receiving a strip or similar decorative sleeve 10 (a strip of paper, a sticker or any convenient wrapping element). The decorative sleeve 10 is covering at least the upper portion 301 of the side wall 30.

The sleeve 10 may be added by an in-mold labelling method or the like, or added after the molding of the body 3. Here, the outer face of the annular upper portion 301 is smooth, without any relief. With such an arrangement, the upper portion 301 is particularly useful for displaying information and can be typically covered by a rectangular shaped strip or sleeve 10 arranged in a form of a sleeve label. It is also compatible with e.g. inline digital printing.

In some embodiments, the side wall 30 may define a top opening O1 of higher diameter D than the corresponding size defined at the annular bearing surface 32. Such configuration is obtained in Figs 1 and 3 by use of the specific lower portion 302, which tapers downwardly, preferably in a curved manner. With such configuration, the content is easy to retrieve by use of a spoon, especially when a circular cross-section or a continuously rounded cross-section is provided in the bottom 4 and in the lower portion 302.

Alternatively, the bearing surface 32 may be larger than the top opening O1. Independently or additionally, the side wall 30 may be continuously curved in a convex manner (as perceived from outside the container 1), from the top 31 to the bearing surface 32 forming the outer limit of the bottom 4. This option may be of interest to reduce overall height H1 of the container 1.

In the embodiment of Fig. 1, the side wall 30 of the hollow body 3 may advantageously be provided with an upper portion 301 of cross sections of an increasing size with increased spacing from the top flange 5. With such configuration, a cylindrical portion or a bulge 30c may optionally be provided at a distance from the top 31. The maximal outer diameter or similar greater dimension D1 of the body section, as measured perpendicularly to the longitudinal axis X, is preferably such that the ratio D/D1 remains superior to 1:2. More generally the following relation may be satisfied:

$$0.70 < D/D1 < 0.97.$$

Of course, the greater dimension D1 is not necessarily measured in a bulge 30c as in Fig. 1 and may be, for instance, a diameter of a cylindrical portion.

The upper portion 301 may proportionally taper less, upwardly, than the lower portion 302 is tapering, downwardly. In the illustrated embodiment, the annular side wall 30 optionally comprises a peripheral bulge 30c at a junction between the upper portion 301 and the lower portion 302. Here, the annular side wall 30 comprises a bulge 30c having a circular cross section and maximal width of the upper portion is defined at the bulge 30c. Such bulge 30c may be of interest to prevent any slippage (downwardly or upwardly slippage) of a wrapping element or similar decorative banderol, without the need of forming an axial abutment shoulder or similar reliefs for maintaining such element.

Regarding the flexible top lid 20, such lid is adapted to prevent use of any rigid cap or other cap means above the body 3. The flexible top lid 20 is thus the outermost upper element of the container 1 and may be directly used to form the primary surface for decoration. Digital inline printing or any kind of marking may be performed to define label information and/or decorative elements on the top surface S20 of the top lid 20.

In some options, using this arrangement with label information and/or decorative marks on the top surface S20 is of interest to provide a hollow body 3 that remains unwrapped and unmarked with printing material, whereby the body 3 is left "pure" for a better recyclability. The one piece hollow body 3 thus may entirely define the outer face of the side wall 30, without need for additional layer or marking material. The production method may also be simple as no labelling is required around the body side wall 30.

Now referring to Figs 2A-2C, 3, 6 and 7A-7B and 8, some non-limiting examples of making containers 1 are described.

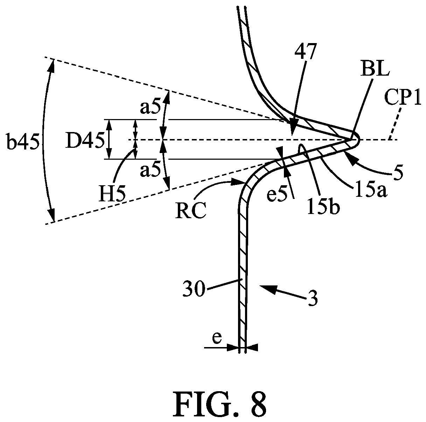

Referring to Fig. 3, hollow bodies 3 may be each obtained from a plastic piece defining a pre-container 40, here having a single opening 40a. It is understood that the pre-container 40 may be produced as an optimized intermediary blow-molded piece, ready to be cut, preferably by trimming, thanks to a circumferential groove 47 (shown in Fig. 8 when the open section 41 of the pre-container 40 has not been trimmed yet) or similar relief facilitating the cut. Fig. 3 shows the two complementary parts of the pre-container 40 after such cut.

At the upper end of the body part used to define the hollow body 3, a circumferential flange extending inwardly from the corresponding annular end (top 31) of the side wall 30 is defined during a cutting step, preferably a trimming step. The top flange 5 in an unsealed state is thus obtained. A cutting element may be inserted through the pre-container sidewall at the bottom line BL of the groove 47, so as to perform the trimming.

Referring to Fig. 8, it can be seen a longitudinal profile of the circumferential groove 47, suitable to define the top flange 5 after the cutting, preferably trimming.

In the pre-container 40, the part intended to form the top flange 5 is tapering upwardly, so that a shallow angle a5 is defined between a cut plane CP1 perpendicular to the longitudinal axis X and the upper face 15a of the top flange 5. The angle a5 is typically between 5° and 20°, preferably between 10° and 20°, so that height H5 of the top flange 5 in the unsealed state is minimized. Such height H5 may be inferior to 2.0 or 3.0 mm and the ratio H5/H1 is preferably inferior to 2/100 or 3/100.

Before the cutting, preferably the trimming, the pre-container 40 is obtained in a mold. Such pre-container 40 may be produced by means of blow molding a preform containing PET or similar polymer plastic material. The method to obtain the pre-container 40 may be an injection blow molding method for example an injection stretch blow molding method (both being referred to as I(S)BM), or an extrusion blow molding method (EBM). Such method is suitable to produce a pre-container 40 having a first end provided with a single opening 40a (optionally a narrow opening of greater size as compared to the top opening O1).

When ejected from the blow molding machine, the pre-container 40 is provided with a bottom section and a section 41 having an open end. The open section 41 optionally includes a neck 41a and a shoulder 41b. The bottom section forms the hollow body 3 and extends longitudinally around the central axis. The central axis typically defines a longitudinal stretching axis.

The average thickness of the pre-container sidewall may be typically inferior to 450 μm, preferably 400 μm, preferably 300 μm.

Optionally, the preform may also be elongated or provided with a tapering toward the lower end, in order to obtain a pre-container 40 of reduced thickness both in an upper portion and in a lower portion of the side wall.

Having such kind of preform may be of interest to have a longitudinal stretching ratio inferior to the radial stretching ratio, which is often preferred to optimally reduce amount of plastic material in the pre-container sidewall.

Regarding the circumferential groove 47, formed in the sidewall to allow the cut, such groove 47 may be at least twice as great in width D45 as compared to height H5 (illustrated in Fig. 2A and 8) initially defined between the outer rim 5a and the inner rim 5b of the top flange. Such circumferential groove 47 may have a V-shape longitudinal profile in the sidewall. The V-shape is defined with a determined apex angle also called the aperture angle b45, which is typically comprised between 10° and 40°, as measured in any longitudinal plane parallel to the central axis. Such aperture angle is twice the angle a5 obtained after a trimming when the groove has a symmetrical V-shape profile. The angle a5 shown in Fig. 2A is greater than final angle a5' obtained after the sealing of the flexible top lid 20. For instance, the angle a5 is between 5° and 20°, preferably between 10° and 20°, preferably between 13° and 17°.

The trimming at the bottom line BL of the groove 47 is performed using suitable trimming equipment. When the bottom line BL is circular, a rotation movement may be used for the cutting edge or for the pre-container 40. The one or more blades used for the trimming are extending transversally relative to the central axis. In such trimming operation, the open section 41 of the pre-container 40 is cut away and the hollow body 3 is retrieved. Typically, the open section 41 is internally recycled (which means zero industrial scrap).

Rotation of the elongated pre-container 40 along a cutting element, for instance a knife having a slightly curved cutting edge, may optionally be limited to the diameter or circumference required for fully cutting the plastic material at a bottom line of the groove, which prevents the generation of chips or plastic particles.

The cutting element may be a non-heated cold knife, possibly with a resharpenable blade. Of course, the trimming operation may be implemented in various manners. It is understood such trimming operation may be performed at high rate of production.

Referring to Fig. 6, the trimming step may be followed by a filling step and a sealing step for sealing the flexible top lid 20, which allows the container 1 to be closed in tight manner.

The wide top opening O1 is advantageous for fast filling of the content. Regarding the filling step, it is understood that a single filling may be performed as the hollow body 3 defines a single compartment.

Referring to Figs 6 and 7A-7B, the flexible top lid 20 can be sealed axially to cover the top opening O1, after the filling. The top opening O1 may be advantageously circular as a better sealing, with great homogeneity, can be obtained.

The flexible lid, here a top lid 20, essentially consists of paper, plastic, or association of such materials, for example a PET material, preferably metal-free. The flexible lid 20 may be deprived from any metallic foil, the flexible lid 20 being preferably a metal-free film for purpose of recyclability.

Referring to Fig. 2B, the outer rim 5a of the flange 5 has, at least before the sealing, a determined thickness e5a comprised between 400 μm and 600 μm. Such determined thickness e5a is sufficient to obtain a hinge effect at annular region Z3 shown in Figs 2A and 4. Such hinge effect prevents cracks to be formed, especially when pressure applied onto the flange is subject to repeated variations.

Such hinge effect is easily obtained when the flange 5 is tapering upwardly (at least before the sealing of the flexible top lid 20), so as to define the angle a5, here a slope angle between 5° and 20°, preferably between 10° and 20°, to the horizontal at the ring portion 22. Typically, the slope angle a5 (in unsealed state of the flange 5) is between 13° and 17°, for example 15°.

Referring to Figs 2A-8, it is clear that the horizontal typically coincides with the top opening O1 (in normal upstanding position of the container 1 as illustrated in the drawings). In some variants, the top opening O1 may not extend in a horizontal plane but the longitudinal axis X is vertical or substantially vertical (in normal upstanding position of the container 1).

The flange 5 of the body 3 is provided with an exterior face, here the upper face 15b, having a flat portion of annular shape. "Flat" here means that the longitudinal profile (as perceived in any longitudinal plane including the longitudinal axis) is straight in the flat portion. Referring to Fig. 2B, the radial width rw of such flat portion of the upper face 15b is of at least 1.5 mm, preferably at least 2 mm, before the sealing. Fig. 8 shows such straight profile in the upper face 15b of the top flange 5, before the sealing. The radial width rw' (shown in Fig. 2C) of the flat portion in the upper face 15b may be also superior or equal to 1.5 mm after the sealing.

As illustrated in Fig. 2B-2C, the ring portion 22 may be less angled after the sealing. The flat portion may form a first portion FP1 distal from the inner rim 5b, which is formed in a second portion FP2 of the flange 5, which is typically horizontal (perpendicular to the longitudinal axis X). After the sealing, the first portion FP1 may extend parallel or nearly parallel to the second portion FP2 (adjacent to the first portion FP1). The second portion FP2 may be a horizontal edge portion (on the inner side of the top flange 5) that is horizontal before and after attachment of the top lid 20, while the first portion FP1 is sloped (with angle a5) at least before the sealing. Preferably the outer rim 5a is formed where there is a minimum radius of curvature in the longitudinal profile of the hollow body 3, such a radius of curvature RC being here comprised between 1.0 and 2.0 mm (at the outer rim 5a), before the sealing by the top lid 20.

The flat portion FP1 forms or is part of the ring portion 22 that is heated during the sealing. This is of interest to have efficient sealing, especially when PET material is involved.

The hollow body is in PET and the flange 5 has a radial extension Lt superior or equal to 2.0 mm, preferably 2.5 mm, and inferior or equal to 5.0 mm. The radial extension Lt is typically measured in a plane (for instance the opening plane) perpendicular to the longitudinal axis X.

A sealing head 50, suitable for the sealing step, may be provided with a front face 51 having a central portion 51a provided with vacuum apertures and an annular portion (heating ring 51b) adapted to transmit heat to the top flange 5 and to the crown-shaped or disc-shaped margin portion 22 of the flexible top lid 20. The sealing head 50 provides a vacuum to pick & release the flexible lid 20, and a heating ring to activate the sealing.

Referring to Fig. 7A, the heating ring 51b in the sealing head 50 may form a metal part and is here designed to operate at a diameter d' that is greater than diameter D of the top opening O1. It is typically done by the sealing head 50 pushing linearly, for instance vertically, onto the upper face 15b. The front face 51 is thus facing the upper face 15b of the top flange 5. During the sealing, the position of the flexible top lid 20 is adjusted in a centered manner to cover the front face 51 and can exactly be pushed, by the heating ring 51b (without offset), onto an annular region between the outer rim 5a and the inner rim 5b of the top flange. The flat portion of the ring portion 22 can be pressed and heat.

The sealing of the lid 20, here a flexible top lid, is performed by applying the sealing head 50 at a temperature that may be maintained at a temperature level comprised between 140°C and 200°C. The sealing can be divided into at least two sealing sub-steps, preferably from two to four sealing sub-steps. For instance, in order to seal the top lid 20 onto the upper face 15b of the top flange 5, a pushing action from the sealing head 50 may be repeated, with two, three, four or five repetitions.

Each time, pressure is released and the top flange 5 may oscillate between a pressed state and a release state (which optionally corresponds to a state with a lower pressure from the sealing head).

Due to the heat treatment and deformation pressure, the slope formed by the top flange 5 is decreased. For instance the angle a5 of about 15° +/- 5° being converted into a final angle a5' of about 4° +/- 3°. In the illustrated embodiment of Figs 2A-2C and 8, the top flange 5 is made of PET, preferably semi-crystalline PET.

In preferred embodiments, the sealing is performed by at least two pushing actions from the sealing head 50. When the sealing of the flexible lid 20 involves PET material at the ring portion, it is typically performed with a variation of pressure values for the contact. This is due to relative movement between the sealing head 50 and the hollow body 3. Hinge effect at hinge area Z3 is of interest to keep perfect integrity of the body 3, here a PET body.

The slope angle a5 (formed in unsealed state of the flange 5) is decreased in this manner, progressively, to the lower angle value a5' corresponding to the final angle in sealed state.

The flange 5 has here a maximum thickness e5, which is typically located in region of the ring portion 22 provided with flat surface portion, for contact with the sealing head 50. The maximum thickness e5 is preferably at least 400 $\mu$m and may be higher than an average thickness e of the side wall 30, preferably at least 100 $\mu$m higher.

In preferred embodiments, the flexible top lid 20 is sized and shaped so that only one pull tab PT of the lid is laterally shifted away from the active face of the sealing head. As a result, the pull tab PT is not adhered to the body 3 and radially protrudes outward to be laterally shifted relative to the annular top 31 of the side wall 30. After the sealing, the annular outer edge 20b of the flexible lid 20 extends not beyond 1 mm (except in region of the pull tab PT) from the outer rim 5a of the top flange 5 having the final slope as illustrated in Fig. 2B (the slope being here provided with an angle a5' defined between the lower face 15a of the top flange 5 and a horizontal plane; the angle a5' is of about 5° in non-limitative example of Fig. 2B but could be lower or slightly higher).

The top flange 5, as obtained after the sealing, may be provided with a low radius of curvature RC' in the region adjacent to the top 31 of the annular side wall 30. The radius of curvature RC' may be lower than 2 mm and is here slightly lower than the corresponding radius of curvature RC before sealing. Optionally at the outer rim 5a, the radius of curvature RC of the container outer face may be comprised between 1 and 2 mm, for example about 1.5 mm. Such radius of curvature is measured in a plane parallel to the longitudinal axis X and intersected by the longitudinal axis X.

While the sealing head 50 illustrated in Fig. 7A may be arranged in the longitudinal direction to seal the flexible top lid 10, other configurations may be used, for instance with small tilting of the sealing head 50. Besides, the top flange 5 can optionally be tilted (at a small angle relative to the horizontal plane) in some variants.

When a decorative sleeve 10 is applied, the fixing step may be performed by a tool moving the sleeve 10 from a direction opposite to the top of the container 1, or more generally opposite to the flexible lid 20. The decorative sleeve is thus adhered to the side wall 30 after being transported longitudinally from the bottom side, preferably at an axial distance from the annular bearing surface 32 of the bottom 4.

The container 1 can be used for product comprising the container and a content in the container. Thus at least a part of an interior volume V of the container is filled with a content. The container can be a packaging element of the content, useful to transport, protect, preserve, and/or otherwise procure said content.

The content can be any kind of content to be procured to a user, for example a consumer, in moderate quantities. The content can for example a food or beverage composition, a drug, a personal-care composition, a home-care composition, a home improvement composition, a toy, a small part good.

Examples of personal care compositions include hair care compositions such as shampoo compositions, conditioner compositions or hair coloring compositions, skin compositions such soap compositions, body wash compositions, sun protection compositions, hydrating compositions or anti-aging compositions, and make-up compositions.

Examples of home-care compositions include, fabric care compositions such as laundry compositions or softener compositions, dish-washing compositions such as manual dish washing compositions or automatic dish washing compositions, hard-surface cleaning compositions, such as kitchen cleaning compositions, bathroom cleaning compositions, wood floor cleaning compositions or tiles cleaning compositions.

Examples of home improvement compositions include paints, glues, plasters or cements compositions.

Examples of small parts goods include nails, screws and the like.

Food or beverages are compositions that are to be orally consumed. This can be in various forms including liquid, viscous semi-fluid, or solid, optionally as a powder. The food can be a spoonable viscous semi fluid composition or spoonable solid. It can be for example or scoopable solid, as opposed to a spoonable powder.

The beverage can be water, carbonated or non-carbonated, non-alcoholic beverages (also referred to as soft drinks), carbonated or non-carbonated, alcoholic beverages, carbonated or non-carbonated, milk or vegetal milk substitutes.

The food can be cereals, dairy compositions, vegetal dairy substitute compositions, deserts compositions such as creams, mousses, gels, puddings, icecreams compositions, fruits, vegetables, or fruit or vegetables compositions for example whole fruits or whole fruit parts, fruit purees or jams, meat of meat substitutes, confectionary compositions, sauces compositions, soups compositions, infant nutrition compositions, medical nutrition compositions, coffee creaming or whitening compositions, coffee or chocolate compositions, for example instant coffee or chocolate, or other grocery compositions.

The food can be a frozen composition, chilled or fresh, typically with a storage at a temperature of from 0°C to 10°C, or long shelf ambient temperature food, typically with a storage at a temperature of higher than 15°C.

In some embodiments the food is a wet food compositions, comprising substantial amounts of moisture or water, as opposed to dehydrated food compositions, for example at least 20% by weight, or at least 30% by weight, or at least 40% by weight, or at least 50% by weight, or at least 60% by weight, at least 80% by weight. Such compositions can be more sensitive to contaminations and a high resistance sealing, for example with a high vacuum leak resistance can be appropriate.

Dairy compositions or vegetal dairy substitute compositions typically comprise of dairy material or a dairy substitute material. Herein, unless otherwise provided "dairy" or "milk" can encompass vegetal substitutes, for example based on soy, oats, almond, rice, coconut and mixture thereof.

The dairy composition can be for example a dessert, a fermented dairy composition such as yogurt or kefir, a cheese, butter.

The dairy material is typically comprised of milk and/or ingredients obtained from milk. It is also referred to as a "milk-based composition". Herein milk encompasses animal milk, such as cow's milk, and also substitutes to animal milk, such as vegetal milk, such as soy milk, rice milk, coconut milk, almond milk, oats milk etc...

Dairy compositions are known by the one skilled in the art of dairy products, preferably of fermented dairy products. Herein a milk-based composition encompasses a composition with milk or milk fractions, and compositions obtained by mixing several previously separated milk fractions. Some water or some additives can be added to said milk, milk fractions and mixtures. Preferably the milk is animal milk, for example cow's milk. Some alternative animal milks can be used, such as sheep milk or goat milk.

The milk-based composition can typically comprise ingredients selected from the group consisting of milk, half skimmed milk, skimmed milk, milk powder, skimmed milk powder, milk concentrate, skim milk concentrate, milk proteins, cream, buttermilk and mixtures thereof. Some water or additives can be mixed therewith. Examples of additives that can be added include sugar, sweeteners, fibers, and texture modifiers.

Fermented dairy compositions typically comprise bacteria, preferably lactic acid bacteria, preferably alive. Appropriate bacteria for fermentation are known by the one skilled in the art. It is mentioned that lactic acid bacteria are often referred to as ferments or cultures or starters. The lactic acid bacteria preferably comprise, preferably essentially consist of, preferably consist of, Lactobacillus delbrueckii ssp. bulgaricus (i.e. Lactobacillus bulgaricus) and Streptococcus salivarius ssp. thermophilus i.e. (Streptococcus thermophilus) bacteria. The lactic acid bacteria used in the invention typically comprise an association of Streptococcus thermophilus and Lactobacillus bulgaricus bacteria. This association is known and often referred to as a yogurt symbiosis.

Fermented dairy compositions are typically obtained by a process involving a fermentation step with at least one lactic acid bacteria. In this step the dairy material is inoculated with the lactic acid bacteria, and the mixture is then allowed to ferment at a fermentation temperature. Such inoculation and fermentation operations are known by the one skilled in the art. During fermentation, the lactic acid bacteria produce lactic acid and thus cause a pH decrease. With the pH decreasing proteins coagulate to form a curd, typically at a breaking pH. The fermentation temperature can be of from 30°C to 45°C, preferably from 35 °C to 40 °C, with a pH decrease to a breaking pH at which proteins coagulate to form a curd. The breaking pH is preferably of from 3.50 to 5.50, preferably of from 4.0 to 5.0, preferably from higher than 4.5 to 5.0.

The containers 1 may be grouped in a food pack. For example, a wrapping element made of cardboard or plastic may be used for packing the containers 1 in two rows. The wrapping element, such as disclosed in document EP 0461947, may define a top panel, a bottom panel and at least two side panels. Spacing elements, for example a beam member or folded members, may be optionally provided to maintain the containers in parallel rows.

More generally, such food pack may be provided with at least one row of containers. The covering element may be used to group at least two containers, for example by defining respective cavities for receiving with a small play the lower parts of the containers 1.

The container 1 can be for example a container having a capacity of, or containing a content of a volume of (or mass of) of 50 ml (or 50 g), to 1 L (or 1 kg), for example a container of 50 ml (or 50 g) to 80 ml (or 80 g), or 80 ml (or 80 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 200 ml (or 200 g) to 250 ml (or 250 g) or 250 ml (or 250 g) to 300 ml (or 300 g), or 300 ml (or 300 g) to 500 ml (or 500 g), or 500 ml (or 500 g) to 750 ml (or 750 g), or 750 ml (or 750 g) to 1 L (or 1kg).

The present invention has been described in connection with the preferred embodiments. These embodiments, however, are merely for example and the invention is not restricted thereto. For instance, the top flange 5 used for the containers 1 shown in Figs 1 and 3 is not necessarily provided with a circular edge. Other shapes, including straight edge portions may be used. Besides, the side wall 30 does not necessarily always extend regularly around a longitudinal axis X, here illustrated as a symmetry axis. Of course, the side wall 30 may be provided with a longitudinal irregular profile and/or significant curves, possibly with at least one oblique gripping part or oblique shoulder.

It will be understood by those skilled in the art that other variations and modifications can easily be made within the scope of the invention as defined by the appended claims, thus it is only intended that the present invention be limited by the following claims.

Any reference sign in the following claims should not be construed as limiting the claim. It will be obvious that the use of the verb "to comprise" and its conjugations does not exclude the presence of any other elements besides those defined in any claim. The word "a" or "an" preceding an element does not exclude the presence of a plurality of such elements.

## Claims

1. A method of sealing a container (1) at an annular end thereof, the method comprising the following steps:

    - providing a hollow body (3), comprising a side wall (30) extending around a longitudinal axis (X) and a flange connected to an annular top (31) of the side wall (30), the flange (5) surrounding an axial opening (O1) of the container and being an internal flange protruding radially inward from the annular top (31) as far as an annular inner rim (5b);

- thermosealing a flexible lid (20) onto the flange (5) to close the opening (O1), by axially contacting, pushing and heating the flexible lid (20) with a ring portion (22) of the flange (5);

wherein the flange (5) has a radial extension (Lt) superior or equal to 2.0 mm, preferably superior or equal to 2.5 mm, and inferior or equal to 5.0 mm, measured between the annular inner rim (5b) and an annular outer rim (5a) adjacent to the annular top (31) of the side wall (30),

and wherein the annular inner rim (5b) extends perpendicular to the longitudinal axis (X), the flange (5) tapering upwardly at least before the thermosealing of the flexible lid (20), so as to form a slope angle (a5) between 5° and 20°, preferably between 10° and 20°, to a plane perpendicular to the longitudinal axis (X), at the ring portion (22) and,

**characterised in that** the hollow body (3) is in PET and **in that** the flexible lid (20) is comprised of paper or plastic and is in annular contact with the hollow body (3) only at an upper face (15b) of the flange (5), this annular contact being formed entirely above the side wall (30), the flexible lid (20) being arranged in sealing contact with the upper face (15b) of the flange (5).

2. The method according to claim 1, wherein the thermosealing is performed after a filling of an interior volume (V) of the hollow body (3) with a content, the hollow body (3) being a single piece body having a bottom (4) at the opposite from the single opening (O1) which is a top opening (O1) of the hollow body (3), the flange being a top flange (5).

3. The method according to claim 2, wherein the thermosealing is performed by using a flexible top lid (20) of foil material, and wherein the flexible top lid (20) has a pull tab (PT) laterally shifted relative to the top flange when thermosealing the flexible top lid (20) onto the top flange (5).

4. The method according to any one of the preceding claims, wherein the flange (5) is provided with an exterior face having a flat portion of annular shape having a radial width (rw) of least 1.5 mm before the thermosealing, preferably at least 2.0 mm, and wherein the flat portion forms or is part of the ring portion (22) that is heated during the thermosealing, and/or

wherein the hollow body (3) has a longitudinal profile with a curvature radius (RC) formed at the annular outer rim (5a), which is of from 1.0 to 2.0 mm before the thermosealing.

5. The method according to any one of the preceding claims, wherein the annular outer rim (5a) of the flange (5) has, at least before the thermosealing, a determined thickness (e5a) at least equal to 400 $\mu$m and not superior to 600 $\mu$m.

6. The method according to any one of the preceding claims, wherein the flange (5) has a maximum thickness (e5) higher than an average thickness (e) of the side wall (30), preferably at least 100 $\mu$m higher, said maximum thickness (e5) being preferably at least 400 $\mu$m.

7. The method according to any one of the preceding claims, wherein the thermosealing of the flexible lid (20) is performed by applying a sealing head (50) at a temperature of from 140°C to 200°C, the thermosealing preferably including at least two thermosealing sub-steps, preferably from two to four sealing sub-steps.

8. The method according to claim 7, wherein the thermosealing is performed by at least two pushing actions by the sealing head (50) so as to decrease the slope angle (a5) defined in unsealed state of the flange (5) to a lower angle value (a5') defined in sealed state of the flange (5),

and wherein, preferably, one among the sealing head (50) and the side wall (30) of the hollow body (3) is repeatedly displaced in two opposite directions during the thermosealing, at least one movement in one of the two opposite directions being performed linearly along a stroke that is preferably shorter or equal to height (H5) of the flange (5) in the unsealed state.

9. The method according to any one of the preceding claims, wherein the slope angle (a5) in unsealed state of the flange is between 13° and 17°.

10. The method according to any one of the preceding claims, wherein the flexible lid (20) essentially consists of paper, plastic, or association of such materials, preferably semi crystalline PET, the flexible lid (20) being deprived from any metallic foil.

11. The method according to any one of the preceding claims, wherein the opening (O1) has a circular cross section, and wherein the flexible lid (20) forms an uppermost face of the container (1) at the opposite from a bottom (4), the side wall (30) being without any neck and without any thread adjacent to the flange (5).

12. The method according to any one of the preceding claims, wherein the thermosealing of the flexible lid (20) to hollow body material of the ring portion (22) is performed with a variation of pressure values for the contact due to relative movement between the sealing head (50) and the hollow body (3), with a vacuum leak resistance of at least 0.2 mbar/mm2, preferably from 0.2 to 2.0 mbar/mm$^2$.

13. The method according to any one of the preceding claims, wherein the side wall (30) is provided with an annular bulge (30c), the side wall having an upper portion (301) that tapers upwardly from the bulge (30c) toward the flange (5),

wherein the flange is a top flange (5) of the container (1), and wherein the side wall (30) has a flat longitudinal profile, at least in said upper portion (301) which is adjacent to the top flange, the upper portion (301) extending at least 10 mm, preferably at least 20 mm downwardly from the annular outer rim (5a) of the top flange (5).

**Patentansprüche**

1. Verfahren zum Verschließen eines Behälters (1) an einem ringförmigen Ende davon, wobei das Verfahren die folgenden Schritte umfasst:

- Bereitstellen eines Hohlkörpers (3), der eine sich um eine Longitudinalachse (X) erstreckende Seitenwand (30) und einen mit einer ringförmigen Oberseite (31) der Seitenwand (30) verbundenen Flansch umfasst, wobei der Flansch (5) eine axiale Öffnung (O1) des Behälters umgibt und ein Innenflansch ist, der von der ringförmigen Oberseite (31) bis zu einem ringförmigen Innenrand (5b) radial einwärts vorsteht;
- Thermoversiegeln eines flexiblen Deckels (20) auf dem Flansch (5), um die Öffnung (O1) zu schließen, indem der flexible Deckel (20) mit einem Ringteil (22) des Flansches (5) axial in Kontakt gebracht, gedrückt und erwärmt wird; wobei der Flansch (5) eine radiale Ausdehnung (Lt) größer oder gleich 2,0 mm, vorzugsweise größer oder gleich 2,5 mm, und kleiner oder gleich 5,0 mm aufweist, gemessen zwischen dem ringförmigen Innenrand (5b) und einem ringförmigen Außenrand (5a) benachbart zu der ringförmigen Oberseite (31) der Seitenwand (30), und wobei sich der ringförmige Innenrand (5b) senkrecht zur Longitudinalachse (X) erstreckt, wobei sich der Flansch (5) zumindest vor dem Thermoversiegeln des flexiblen Deckels (20) aufwärts verschmälert, um einen Neigungswinkel (a5) zwischen 5° und 20°, vorzugsweise zwischen 10° und 20°, zu einer Ebene senkrecht zur Longitudinalachse (X) am Ringabschnitt (22) zu bilden und **dadurch gekennzeichnet, dass** der Hohlkörper (3) aus PET ist und dass der flexible Deckel (20) aus Papier oder Kunststoff besteht und nur an einer Oberseite (15b) des Flansches (5) in ringförmigem Kontakt mit dem Hohlkörper (3) steht, wobei dieser ringförmige Kontakt vollständig oberhalb der Seitenwand (30) ausgebildet ist, wobei der flexible Deckel (20) in versiegeltem Kontakt mit der Oberseite (15b) des Flansches (5) angeordnet ist.

2. Verfahren nach Anspruch 1, wobei das Thermoversiegeln nach dem Füllen eines Innenvolumens (V) des Hohlkörpers (3) mit einem Inhalt durchgeführt wird, wobei der Hohlkörper (3) ein einstückiger Körper ist, der einen Boden (4) gegenüber der einzigen Öffnung (O1) aufweist, die eine obere Öffnung (O1) des Hohlkörpers (3) ist, wobei der Flansch ein oberer Flansch (5) ist.

3. Verfahren nach Anspruch 2, wobei das Thermoversiegeln durch Verwenden eines flexiblen oberen Deckels (20) aus Folienmaterial durchgeführt wird, und wobei der flexible obere Deckel (20) eine Zuglasche (PT) aufweist, die beim Thermoversiegeln des flexiblen oberen Deckels (20) auf den oberen Flansch (5) lateral relativ zum oberen Flansch verschoben wird.

4. Verfahren nach einem der vorhergehenden Ansprüche, wobei der Flansch (5) mit einer Außenfläche bereitgestellt wird, die einen flachen, ringförmigen Abschnitt mit einer radialen Breite (rw) von mindestens 1,5 mm vor dem Thermoversiegeln, vorzugsweise mindestens 2,0 mm, aufweist, und wobei der flache Abschnitt den Ringabschnitt (22), der während des Thermoversiegelns erhitzt wird, bildet oder Teil davon ist, und/oder

wobei der Hohlkörper (3) ein Longitudinalprofil mit einem am ringförmigen Außenrand (5a) ausgebildeten Krümmungsradius (RC) aufweist, der vor dem Thermoversiegeln 1,0 bis 2,0 mm beträgt.

5. Verfahren nach einem der vorhergehenden Ansprüche, wobei der ringförmige äußere Rand (5a) des Flansches (5) zumindest vor dem Thermoversiegeln eine festgelegte Dicke (e5a) aufweist, die zumindest gleich 400 μm und nicht größer als 600 μm ist.

6. Verfahren nach einem der vorhergehenden Ansprüche, wobei der Flansch (5) eine maximale Dicke (e5) aufweist, die größer ist als eine durchschnittliche Dicke (e) der Seitenwand (30), vorzugsweise mindestens 100 μm, wobei die maximale Dicke (e5) vorzugsweise mindestens 400 μm beträgt.

7. Verfahren nach einem der vorhergehenden Ansprüche, wobei das Thermoversiegeln des flexiblen Deckels (20) durch Aufbringen eines Versiegelungskopf (50) bei einer Temperatur von 140 °C bis 200 °C durchgeführt wird, wobei das Thermoversiegeln vorzugsweise mindestens zwei Thermoversiegel-Teilschritte, vorzugsweise zwei bis vier Versiegel-Teilschritte beinhaltet.

8. Verfahren nach Anspruch 7, wobei das Thermoversiegeln durch mindestens zwei Schiebeaktionen durch den Versiegelungskopf (50) durchgeführt wird, um den Neigungswinkel (a5), der im nicht versiegelten Zustand des Flansches (5) definiert ist, auf einen niedrigeren Winkelwert (a5') zu verringern, der im versiegelten Zustand des Flansches (5) definiert ist, und wobei vorzugsweise einer von dem Versiegelungskopf (50) und der Seitenwand (30) des Hohlkörpers (3) während des Thermoversiegelns wiederholt in zwei entgegengesetzte Richtungen verschoben wird, wobei mindestens eine Bewegung in einer der beiden entgegengesetzten Richtungen linear entlang eines Hubs durchgeführt wird, der vorzugsweise kürzer oder gleich der Höhe (H5) des Flansches (5) im nicht versiegelten Zustand ist.

9. Verfahren nach einem der vorhergehenden Ansprüche, wobei der Neigungswinkel (a5) im nicht versiegelten Zustand des Flansches zwischen 13° und 17° ist.

10. Verfahren nach einem der vorhergehenden Ansprüche, wobei der flexible Deckel (20) im Wesentlichen aus Papier, Kunststoff oder einer Kombination solcher Materialien, vorzugsweise aus teilkristallinem PET, besteht, wobei der flexible Deckel (20) von jeglicher Metallfolie frei ist.

11. Verfahren nach einem der vorhergehenden Ansprüche, bei dem die Öffnung (O1) einen kreisförmigen Querschnitt aufweist und wobei der flexible Deckel (20) eine dem Boden (4) gegenüberliegende oberste Fläche des Behälters (1) bildet, wobei die Seitenwand (30) ohne jeglichen Hals und ohne jegliches Gewinde benachbart zu dem Flansch (5) ist.

12. Verfahren nach einem der vorhergehenden Ansprüche, wobei das Thermoversiegeln des flexiblen Deckels (20) mit dem Hohlkörpermaterial des Ringteils (22) mit einer Variation der Druckwerte für den Kontakt aufgrund der relativen Bewegung zwischen dem Versiegelungskopf (50) und dem Hohlkörper (3) durchgeführt wird, mit einem Vakuumleckwiderstand von mindestens 0,2 mbar/mm², vorzugsweise von 0,2 bis 2,0 mbar/mm².

13. Verfahren nach einem der vorhergehenden Ansprüche, wobei die Seitenwand (30) mit einer ringförmigen Ausbuchtung (30c) bereitgestellt ist, wobei die Seitenwand einen oberen Abschnitt (301) aufweist, der sich von der Ausbuchtung (30c) aufwärts zu dem Flansch (5) hin verschmälert, wobei der Flansch ein oberer Flansch (5) des Behälters (1) ist, und wobei die Seitenwand (30) zumindest in dem oberen Abschnitt (301), der benachbart zu dem oberen Flansch ist, ein flaches Longitudinalprofil aufweist, wobei sich der obere Abschnitt (301) mindestens 10 mm, vorzugsweise mindestens 20 mm, abwärts von dem ringförmigen äußeren Rand (5a) des oberen Flansches (5) erstreckt.

**Revendications**

1. Procédé de scellage d'un contenant (1) au niveau d'une extrémité annulaire de celuici, le procédé comprenant les étapes suivantes :

  - la fourniture d'un corps creux (3), comprenant une paroi latérale (30) s'étendant autour d'un axe longitudinal (X) et une bride reliée à un sommet annulaire (31) de la paroi latérale (30), la bride (5) entourant une ouverture axiale (O1) du contenant et étant une bride interne saillante radialement vers l'intérieur depuis le sommet annulaire (31) jusqu'à un rebord intérieur annulaire (5b) ;
  - le thermoscellage d'un couvercle flexible (20) sur la bride (5) pour fermer l'ouverture (O1) par la mise en contact axialement, la poussée et le chauffage du couvercle flexible (20) avec une partie d'anneau (22) de la bride (5) ;
  dans lequel la bride (5) présente une extension radiale (Lt) supérieure ou égale à 2,0 mm, de préférence supérieure ou égale à 2,5 mm, et inférieure ou égale à 5,0 mm, mesurée entre le rebord intérieur annulaire (5b) et un bord extérieur annulaire (5a) adjacent au sommet annulaire (31) de la paroi latérale (30),
  et dans lequel le rebord intérieur annulaire (5b) s'étend perpendiculairement à l'axe longitudinal (X), la bride (5) étant s'effilant vers le haut au moins avant le thermoscellage du couvercle flexible (20), de manière à former un angle d'inclinaison (a5) entre 5° et 20°, de préférence entre 10° et 20°, par rapport à un plan perpendiculaire à l'axe longitudinal (X), au niveau de la partie d'anneau (22), et
  **caractérisé en ce que** le corps creux (3) est en PET et **en ce que** le couvercle flexible (20) est constitué de papier ou de plastique et est en contact annulaire avec le corps creux (3) uniquement au niveau d'une face supérieure (15b) de la bride (5), ce contact annulaire étant formé entièrement au-dessus de la paroi latérale (30), le couvercle flexible (20) étant agencé en contact étanche avec la face supérieure (15b) de la bride (5).

2. Procédé selon la revendication 1, dans lequel le thermoscellage est réalisé après un remplissage d'un volume intérieur (V) du corps creux (3) avec un contenu, le corps creux (3) étant un corps d'un seul tenant présentant un fond (4) à l'opposé de l'ouverture unique (O1) qui est une ouverture supérieure (O1) du corps creux (3), la bride étant une bride supérieure (5).

3. Procédé selon la revendication 2, dans lequel le thermoscellage est réalisé à l'aide d'un couvercle supérieur flexible (20) de matériau en feuille, et dans lequel le couvercle supérieur flexible (20) présente une patte de tirage (PT) décalée latéralement par rapport à la bride supérieure lors du thermoscellage du couvercle supérieur flexible (20) sur la bride supérieure (5).

4. Procédé selon l'une quelconque des revendications précédentes, dans lequel la bride (5) est pourvue d'une face extérieure présentant une partie plate de forme annulaire représentant une largeur radiale (rw) d'au moins 1,5 mm avant le thermoscellage, de préférence d'au moins 2,0 mm, et dans lequel la partie plate forme ou fait partie de la partie d'anneau (22) qui est chauffée au cours du thermoscellage, et/ou
dans lequel le corps creux (3) présente un profil longitudinal avec un rayon de courbure (RC) formé au niveau du bord extérieur annulaire (5a), qui est de 1,0 à 2,0 mm avant le thermoscellage.

5. Procédé selon l'une quelconque des revendications précédentes, dans lequel le bord extérieur annulaire (5a) de la bride (5) présente, au moins avant le thermoscellage, une épaisseur déterminée (e5a) au moins égale à 400 $\mu$m et pas supérieure à 600 $\mu$m.

6. Procédé selon l'une quelconque des revendications précédentes, dans lequel la bride (5) présente une épaisseur maximale (e5) supérieure à une épaisseur moyenne (e) de la paroi latérale (30), de préférence au moins 100 $\mu$m supérieure, ladite épaisseur maximale (e5) étant de préférence au moins 400 $\mu$m.

7. Procédé selon l'une quelconque des revendications précédentes, dans lequel le thermoscellage du couvercle flexible (20) est réalisé par l'application d'une tête de scellage (50) à une température de 140 °C à 200 °C, le thermoscellage incluant de préférence au moins deux sous-étapes de thermoscellage, de préférence de deux à quatre sous-étapes de scellage.

8. Procédé selon la revendication 7, dans lequel le thermoscellage est réalisé par au moins deux actions de poussée par la tête de scellage (50) de manière à réduire l'angle d'inclinaison (a5) défini dans un état non scellé de la bride (5) à une valeur d'angle inférieure (a5') définie dans un état scellé de la bride (5), et dans lequel, de préférence, l'une parmi la tête de scellage (50) et la paroi latérale (30) du corps creux (3) est déplacée répétitivement dans deux directions opposées au cours du thermoscellage, au moins un déplacement dans l'une des deux directions opposées étant réalisé linéairement suivant une course qui est de préférence inférieure ou égale à une hauteur (H5) de la bride (5) dans l'état non scellé.

9. Procédé selon l'une quelconque des revendications précédentes, dans lequel l'angle d'inclinaison (a5) dans un état non scellé de la bride est entre 13° et 17°.

10. Procédé selon l'une quelconque des revendications précédentes, dans lequel le couvercle flexible (20) se compose sensiblement de papier, de plastique ou d'une association de tels matériaux, de préférence de PET semi-cristallin, le couvercle flexible (20) étant dépourvu de feuille métallique.

11. Procédé selon l'une quelconque des revendications précédentes, dans lequel l'ouverture (O1) présente une coupe transversale circulaire, et dans lequel le couvercle flexible (20) forme une face la plus haute du contenant (1) à l'opposé d'un fond (4), la paroi latérale (30) étant sans col et sans filetage adjacent à la bride (5).

12. Procédé selon l'une quelconque des revendications précédentes, dans lequel le thermoscellage du couvercle flexible (20) sur un matériau de corps creux de la partie d'anneau (22) est réalisé avec une variation de valeurs de pression pour le contact en raison d'un déplacement relatif entre la tête de scellage (50) et le corps creux (3), avec une résistance aux fuites de vide d'au moins 0,2 mbar/mm$^2$, de préférence de 0,2 à 2,0 mbar/mm$^2$.

13. Procédé selon l'une quelconque des revendications précédentes, dans lequel la paroi latérale (30) est pourvue d'un renflement annulaire (30c), la paroi latérale présentant une partie supérieure (301) qui s'effile vers le haut depuis le renflement (30c) vers la bride (5),
dans lequel la bride est une bride supérieure (5) du contenant (1), et dans lequel la paroi latérale (30) présente un profil longitudinal plat, au moins dans ladite partie supérieure (301) qui est adjacente à la bride supérieure, la partie supérieure (301) s'étendant d'au moins 10 mm, de préférence d'au moins 20 mm vers le bas à partir du bord extérieur annulaire (5a) de la bride supérieure (5).

# FIG. 1

FIG. 2A

FIG. 2B

FIG. 2C

FIG. 3

FIG. 4

FIG. 5

FIG. 6

FIG. 7A

FIG. 7B

FIG. 8

**REFERENCES CITED IN THE DESCRIPTION**

**Patent documents cited in the description**

- US 6547093 B
- WO 2014182722 A1
- DE 2806770 A1
- EP 0461947 A